# EUROPÄISCHE PATENTSCHRIFT

(11) **EP 1 495 376 B1**
(45) Veröffentlichungstag und Bekanntmachung des Hinweises auf die Patenterteilung: **04.04.2007**
(21) Anmeldenummer: 03724867.1
(22) Anmeldetag: 11.04.2003
(51) Int. Cl.: G05B 19/05

(54) **VERFAHREN ZUM PROJEKTIEREN UND/ODER BETREIBEN EINER AUTOMATISIERUNGSEINRICHTUNG**
METHOD FOR CONFIGURING AND/OR OPERATING AN AUTOMATION DEVICE
PROCEDE DE CONFIGURATION ET/OU DE FONCTIONNEMENT D'UN DISPOSITIF D'AUTOMATISATION

(30) Priorität: 12.04.2002 DE 10216277
(43) Veröffentlichungstag der Anmeldung: 12.01.2005
(73) Patentinhaber: SIEMENS AKTIENGESELLSCHAFT, 80333 München (DE)
(72) Erfinder: GRIESSBAUM, Reiner, 76761 Rülzheim (DE)
(86) Internationale Anmeldenummer: PCT/DE2003/001238
(87) Internationale Veröffentlichungsnummer: WO 2003/088060

(56) Entgegenhaltungen:
- EP-A- 0 778 688
- WO-A-00/69116
- WO-A-99/49373
- DE-A- 19 711 958
- US-B1- 6 282 572

## Beschreibung

Die Erfindung betrifft ein Verfahren zum Projektieren und/oder Betreiben einer Automatisierungseinrichtung gemäß dem Oberbegriff des Anspruchs 1. Darüber hinaus betrifft die Erfindung ein Engineeringsystem gemäß Oberbegriff des Anspruchs 3 und ferner eine Automatisierungseinrichtung gemäß dem Oberbegriff des Anspruchs 5.

Aus dem Siemens-Katalog ST 70, Kapitel 6, Ausgabe 2001 ist eine Automatisierungseinrichtung mit einer so genannten "Dezentralen Peripherie" bekannt. Diese "Dezentrale Peripherie" ist für dezentrale Lösungen von Automatisierungsaufgaben im Bereich der Fertigungs-, der Prozess- sowie Verfahrenstechnik vorgesehen und umfasst gewöhnlich unterschiedliche, mit mehreren Slave-Baugruppen versehene Peripheriegeräte, die über einen Bus mit einer Master-Einheit verbunden sind. Dabei ist die Master-Einheit gewöhnlich eine Master-Baugruppe, die Bestandteil einer mit mindestens einer CPU- und weiteren Funktionsbaugruppen versehenen leistungsstarken speicherprogrammierbaren Steuerung zur Lösung komplexerer Automatisierungsaufgaben ist.
An die Slave-Baugruppen einer Slave-Einheit sind Aktoren und/oder Sensoren anschließbar, wobei von den Sensoren übermittelte Prozessperipherie-Eingangsdaten in den Slave-Einheiten hinterlegbar sind und wobei den Aktoren von den Slave-Einheiten Prozessperipherie-Ausgangsdaten zuführbar sind, welche die Master-Einheit den Slave-Einheiten übermittelt. Eine wesentliche Aufgabe der Master-Einheit besteht sowohl darin, die Prozessperipherie-Eingangsdaten als Abbild einer übergeordneten Verarbeitungseinheit einer speicherprogrammierbaren Steuerung zu übermitteln, als auch darin, das Abbild der Prozessperipherie-Ausgangsdaten, welches die übergeordnete Verarbeitungseinheit der Master-Einheit zuführt, zu verarbeiten und den Slave-Einheiten als Prozessperipherie-Ausgangsdaten zu übertragen. Die übergeordnete Verarbeitungs einheit bearbeitet das Abbild der Prozessperipherie-Eingangsdaten und das Abbild der Prozessperipherie-Ausgangsdaten zyklisch während eines Bearbeitungs-Zeitintervalls, wobei dieses Bearbeitungs-Zeitintervall (Bearbeitungszyklus) im Wesentlichen mit einem Masterzugriffs-Zeitintervall (Masterzyklus) der Master-Einheit abgestimmt ist. Während dieses Masterzugriffs-Zeitintervalls greift die Master-Einheit während eines Steuerbetriebs lesend und/oder schreibend auf alle am Bus angeschlossenen Slave-Einheiten zu. Dabei übermittelt die Master-Einheit zyklisch jeder Slave-Einheit die den jeweiligen Slave-Einheiten zugehörigen Prozessperipherie-Ausgangsdaten, wobei das Masterzugriffs-Zeitintervall im Wesentlichen durch die Anzahl der an den Bus angeschlossenen Slave-Einheiten bestimmt ist. Als Antwort auf die Übermittlung der Prozessperipherie-Ausgangsdaten greift jede Slave-Einheit während eines jeweils slave-spezifischen Slavezugriffs-Zeitintervalls schreibend auf den Bus zu, wodurch jede Slave-Einheit ihre Prozessperipherie-Ausgangsdaten der Master-Einheit übermittelt.

Damit die Master-Einheit auf die Slave-Baugruppen der Slave-Einheiten lesend und/oder schreibend zugreifen kann, ist für jede Slave-Einheit ein Nutzdatenbereich vorgesehen, in welchen Daten eingeschrieben bzw. aus welchem Daten ausgelesen werden, wobei jeder Slave-Baugruppe ein Teil dieses Nutzdatenbereiches zugeordnet ist.

Die Größe eines Nutzdatenbereiches für eine Slave-Einheit ist z. B. durch ein aus dem Siemens-Katalog ST PCS 7, Kapitel 1, Ausgabe 2001 bekanntes Engineeringsystem projektierbar, wobei die Größe des zu projektierenden Nutzdatenbereiches an die Anzahl der in dieser Slave-Einheit gemäß einer zu lösenden Steueraufgabe vorzusehenden Slave-Baugruppen angepasst wird.

Es kann nun vorkommen, dass z. B. aufgrund von Änderungen im Hinblick auf die zu lösende Steueraufgabe eine Slave-Einheit um eine weitere Slave-Baugruppe zu ergänzen ist. Dies bedeutet, dass der Nutzdatenbereich dieser Slave-Einheit nachprojektiert werden muss, damit die Master-Einheit während des Steuerbetriebs die Slave-Baugruppe ansprechen kann. Dies ist aufwendig, zumal es erforderlich ist, die neue Konfiguration vor einem Steuerbetrieb zu testen.

Der vorliegenden Erfindung liegt die Aufgabe zugrunde, ein Verfahren zum Projektieren und/oder Betreiben einer Automatisierungseinrichtung der eingangs genannten Art zu schaffen, welches den Projektierungsaufwand im Hinblick auf eine mögliche Erweiterung der Automatisierungseinrichtung mit Slave-Baugruppen verringert. Darüber hinaus ist ein Engineeringsystem anzugeben, welches die Durchführung des Verfahrens im Hinblick auf die Projektierung einer Automatisierungseinrichtung ermöglicht. Ferner ist eine Automatisierungseinrichtung zu schaffen, welche während des Steuerbetriebs durch weitere Slave-Baugruppen erweiterbar ist.

Diese Aufgabe wird im Hinblick auf das Verfahren durch die im kennzeichnenden Teil des Anspruchs 1, im Hinblick auf das Engineeringsystem durch die im kennzeichnenden Teil des Anspruchs 3 sowie im Hinblick auf die Automatisierungseinrichtung durch die im kennzeichnenden Teil des Anspruchs 5 angegebenen Maßnahmen gelöst.

Vorteilhaft ist, dass durch die Projektierung mindestens eines "Reserve-Nutzdatenbereichs" für eine Slave-Einheit diese Slave-Einheit für eine Erweiterung um mindestens eine weitere Slave-Baugruppe vorbereitet ist. Für den Fall, dass während des Steuerbetriebs diese Slave-Einheit tatsächlich um eine Slave-Baugruppe erweitert wird, geschieht dies rückwirkungsfrei für alle an dem Bus angeschlossenen Master- und Slave-Einheiten, d. h., es ergeben sich keine Rückwirkungen im Hinblick auf den Datenaustausch zwischen der Master-Einheit und den Slave-Einheiten bzw. den Slave-Baugruppen dieser Slave-Einheiten. Eine Neuprojektierung im Hinblick auf den Nutzdatenbereich und ein Test der um die weitere Slave-Baugruppe ergänzten Automatisierungseinrichtung ist nicht erforderlich.

Anhand der Zeichnung, in der ein Ausführungsbeispiel der Erfindung veranschaulicht ist, werden im Folgenden die Erfindung sowie Ergänzungen und Weiterbildungen näher beschrieben und erläutert.

Es zeigen:
Figur 1 eine Bedieneroberfläche eines Engineeringsystems und
Figur 2 eine projektierte Automatisierungseinrichtung.

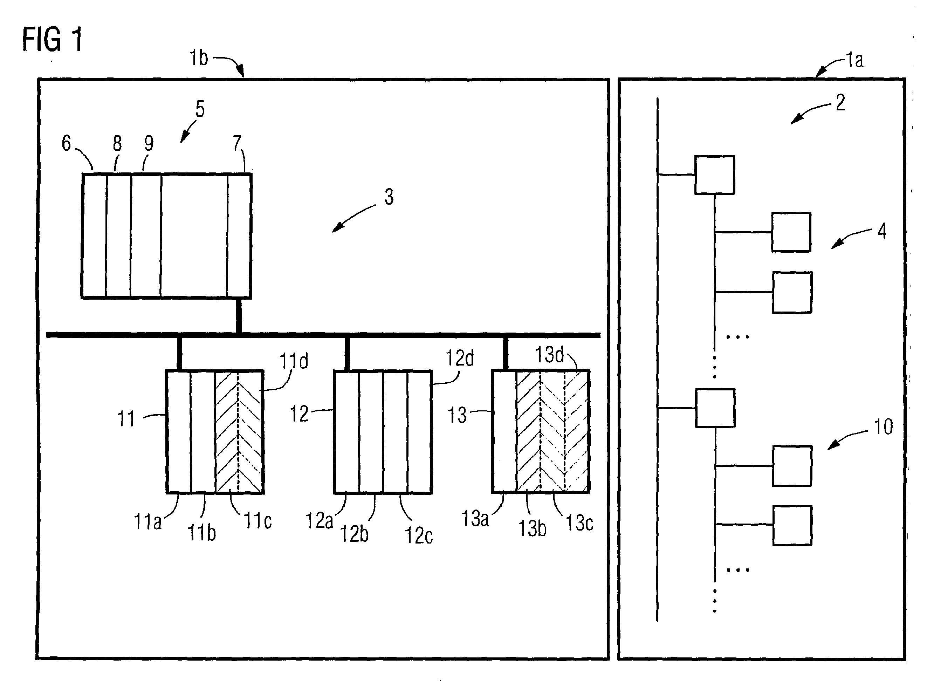

In Figur 1 sind mit 1a, 1b zwei Fenster einer Bedieneroberfläche einer Anzeigeeinheit eines Engineeringsystems bezeichnet, von denen das Fenster 1a zur Darstellung einer Hardware-Bibliothek 2 einer Automatisierungseinrichtung und das Fenster 1b zur Darstellung einer aktuell projektierten Hardware einer Automatisierungseinrichtung vorgesehen ist. Die Hardware-Bibliothek 2 weist auf Projektierungsdaten für Baugruppen einer speicherprogrammierbaren Steuerung, z. B. Baugruppen in Form von CPU-Baugruppen, Kommunikationsbaugruppen, Digitalein- und/oder -ausgabe-Baugruppen, sowie Projektierungsdaten für Baugruppen von Peripheriegeräten und Bussysteme mit dazugehörigen Busanschaltungen. Die Projektierung kann in der Art und Weise bewirkt werden, dass ein Bediener mittels Drag & Drop eine Hardware-Komponente mit einem Bedienelement in Form einer Maus aus dem Fenster 1a auswählt, in das Fenster 1b kopiert und dort die Komponenten entsprechend der zu lösenden Steueraufgabe miteinander verbindet. Im gezeigten Ausführungsbeispiel ist angenommen, dass aus einem Verzeichnis 4 der Hardware-Bibliothek 2 eine speicherprogrammierbare Steuerung 5 mit einer CPU-Baugruppe 6, mit einer Master-Einheit 7 und zwei weiteren Baugruppen 8, 9 ausgewählt ist. Die Master-Einheit braucht selbstverständlich nicht Teil der speicherprogrammierbaren Steuerung 5 zu sein, sondern kann als Bestandteil eines mehrere Baugruppen aufweisenden Zentralgerätes ausgewählt werden, welches über einen Bus mit einer speicherprogrammierbaren Steuerung verbunden ist. Ferner ist angenommen, dass aus einem Verzeichnis 10 der Hardware-Bibliothek 2 eine erste, eine zweite und eine dritte Slave-Einheit 11, 12, 13 ausgewählt sind, welche jeweils eine aus der Hardware-Bibliothek 2 auswählbare Kopfbaugruppe 11a, 12a, 13a aufweisen und welche über eine ebenfalls aus der Hardware-Bibliothek 2 ausgewählte Busverbindung mit der Master-Einheit 7 verbunden sind. Die Master-Einheit 7, die Slave-Einheiten 11, 12, 13 sowie die Busverbindung zur Kopplung der Einheiten sind Bestandteile von dezentralen Peripheriegeräten. Neben den Slave-Einheiten 11, 12, 13 ist für jede Slave-Einheit 11, 12, 13 ein Nutzdatenbereich projektierbar, welcher für auswählbare Slave-Baugruppen, z. B. Slave-Baugruppen in Form von Digital- und/oder Analogein-/ausgabe-Baugruppen, vorgesehen ist, wobei jeder ausgewählten Slave-Baugruppe ein Teil dieses Nutzdatenbereiches zuordenbar ist.

Im gezeigten Ausführungsbeispiel ist lediglich für die Slave-Einheit 12 ein für diese Slave-Einheit 12 maximal möglicher Nutzdatenbereich projektiert, welchem auswählbare Slave-Baugruppen unterschiedlicher Funktionalität zugeordnet werden können. Z. B. ist es möglich, einen Teil 12b des Nutzdatenbereiches einer Digitaleingabe-Baugruppe, einen Teil 12c einer Digitalausgabe-Baugruppe und einen Teil 12d einer Digitalein- und -ausgabe-Baugruppe zuzuordnen. Das Engineeringsystem ist derart ausgebildet, dass durch einen Bediener neben einem für einen Steuerbetrieb erforderlichen Nutzdatenbereich für projektierte Slave-Baugruppen jeder Slave-Einheit 11, 12, 13 zusätzlich ein Reserve-Nutzdatenbereich projektierbar ist, zu welchem noch keine Slave-Baugruppen projektiert und zugeordnet sind, wobei diese Reserve-Nutzdatenbereiche in der Darstellung im Fenster 1b besonders gekennzeichnet sind. Im vorliegenden Beispiel weist die Slave-Einheit 11 einen Reserve-Nutzdatenbereich 11c, 11d auf, welcher für eine mögliche Erweiterung der Slave-Einheit 11 während des Steuerbetriebs der Automatisierungseinrichtung um zwei Slave-Baugruppen gleicher oder unterschiedlicher Funktionalität vorgesehen ist. Die Slave-Einheit 13 weist einen Reserve-Nutzdatenbereich 13b, 13c, 13d auf, welcher ebenfalls für eine mögliche Erweiterung der Slave-Einheit 11 vorgesehen ist. Im gezeigten Beispiel ist der maximal mögliche Nutzdatenbereich der Slave-Einheit 13 als Reserve-Nutzdatenbereich gekennzeichnet, was bedeutet, dass für die Slave-Einheit 13 keine Slave-Baugruppen, sondern lediglich die Kopfbaugruppe 13a projektiert ist und die Slave-Einheit 13 während des Steuerbetriebs um drei Slave-Baugruppen gleicher oder unterschiedlicher Funktionalität erweitert werden kann.

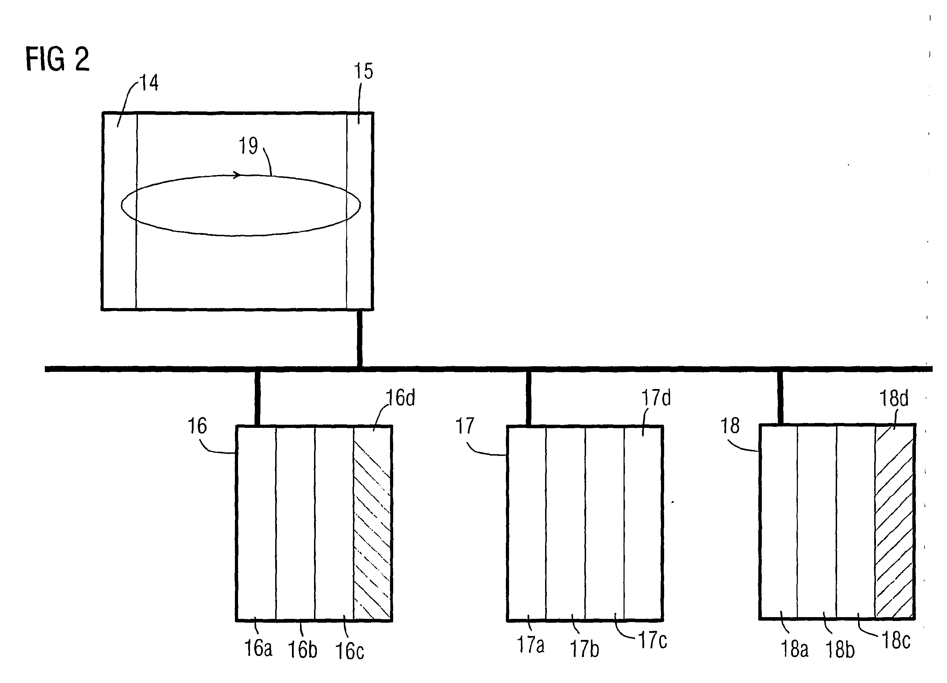

Im Folgenden wird auf Figur 2 verwiesen, in welcher eine projektierte Automatisierungseinrichtung dargestellt ist. Bestandteile dieser projektierten Automatisierungseinrichtung zur Steuerung eines technischen Prozesses sind eine speicherprogrammierbare Steuerung mit einer übergeordneten CPU-Einheit 14 und einer Master-Einheit 15 sowie drei Slave-Einheiten 16, 17, 18. Die Slave-Einheiten 16, 17, 18 weisen jeweils eine Kopfbaugruppe 16a, 17a, 18a auf, über welche die Master-Einheit 15 auf die Slave-Baugruppen der Slave-Einheiten 16, 17, 18 lesend und/oder schreibend zugreift. Die Slave-Einheit 17 ist mit drei Slave-Baugruppen 17b, 17c, 17d bestückt, die Slave-Einheiten 16, 18 dagegen jeweils nur mit zwei Slave-Baugruppen 16b, 16c, 18b, 18c. Diese lediglich mit zwei Slave-Baugruppen bestückten Slave-Einheiten 16, 18 sind für Erweiterungen mit weiteren Slave-Baugruppen vorbereitet, indem für diese Slave-Einheiten 16, 18 jeweils ein Reserve-Nutzdatenbereich 16d, 18d projektiert wurde, der einer Slave-Baugruppe zuordenbar ist.
Es ist angenommen, dass aufgrund einer vorzunehmenden Änderung bzw. Erweiterung der Steueraufgabe die Slave-Einheit 16 mit einer weiteren Slave-Baugruppe, z. B. mit einer Slave-Baugruppe in Form einer Analogeingabe-Baugruppe, und die Slave-Einheit 18 mit einer Slave-Baugruppe, z. B. mit einer Slave-Baugruppe in Form einer Digitalausgabe-Baugruppe, zu erweitern ist. Eine derartige Erweiterung ist ohne Neuprojektierung und während des laufenden Steuerbetriebs möglich. Es ist lediglich eine Nachprojektierung erforderlich, während der mittels des Engineeringsystems den bereits projektierten Reserve-Nutzdatenbereichen die neuen Slave-Baugruppen zunächst zugeordnet werden, wobei eine derartige Nachprojektierung während des aktuellen Steuerbetriebs durchführbar ist. Im vorliegenden Beispiel wird dem Reserve-Nutzdatenbereich 16d die Analogeingabe-Baugruppe und dem Reserve-Nutzdatenbereich 18d die Digitalausgabe-Baugruppe zugeordnet. Anschließend werden durch das Engineeringsystem im Wesentlichen die geänderten Projektierungsdaten der übergeordneten CPU-Einheit 14 beispielsweise in einem Online-Betrieb übermittelt, wobei während eines Aktualisierungs-Zeitintervalls 19 die CPU-Einheit 14 der Master-Einheit 15 diese Änderungen zuführt. Die Analogeingabe-Baugruppe und Digitalausgabe-Baugruppe sind während des Steuerbetriebs der Automatisierungseinrichtung in die jeweilige Slave-Einheit 16, 18 einsetzbar, wobei die Master-Einheit auf diese Baugruppen erst dann lesend und/oder schreibend zugreifen kann, nachdem der jeweiligen Kopfbaugruppe 16a, 18a der Slave-Einheiten 16, 18 angezeigt wird, dass in diesen Einheiten 16, 18 die neuen Slave-Baugruppen eingesetzt wurden. Dazu übermittelt die Master-Einheit 15 den Slave-Einheiten 16, 17, z. B. während des Steuerbetriebs der Automatisierungseinrichtung, jeweils ein Telegramm, welches den Kopfbaugruppen 16a, 18a die nachprojektierten Daten anzeigt, d. h., die Master-Einheit 15 zeigt die Zuordnung der reservierten Nutzdatenbereiche 16d, 18d zu den neu in die Slave-Einheiten 16, 18 hinzugefügten Slave-Baugruppen an. Im vorliegenden Beispiel wird der reservierte Nutzdatenbereich 16d der neu in die Slave-Einheit 16 hinzugefügten Analogeingabe-Baugruppe und der reservierte Nutzdatenbereich 18d der neu in die Slave-Einheit 18 hinzugefügten Digitalausgabe-Baugruppe zugeordnet, wodurch während des weiteren Steuerbetriebs der Automatisierungseinrichtung die Master-Einheit lesend und/oder schreibend über diese Nutzdatenbereiche 16d, 18d auf die Analogeingabe- und die Digitalausgabe-Baugruppe zugreifen kann.

Durch die Projektierung von Reserve-Nutzdatenbereichen ist die Automatisierungseinrichtung für eine eventuelle Erweiterung mit Slave-Baugruppen vorbereitet. Für den Fall, dass die Automatisierungseinrichtung tatsächlich um Slave-Baugruppen erweitert wird, geschieht dies rückwirkungsfrei, d. h., es ergeben sich keine Rückwirkungen für die am Bus angeschlossenen Einheiten im Hinblick auf einen Datenaustausch zwischen der Master- und den Slave-Einheiten während des Steuerbetriebs der Automatisierungseinrichtung. Selbstverständlich ist es möglich, mehrere für die Slave-Einheiten unterschiedliche Reserve-Nutzdatenbereiche zu projektieren, die als "neutrale" Nutzdatenbereiche projektiert sind. Dies bedeutet, die Automatisierungseinrichtung ist für den Steuerbetrieb mit Slave-Baugruppen beliebiger Funktionalität (beliebigen Typs) erweiterbar, wodurch eine Anpassung an eine Änderung der zu lösenden Steueraufgabe leicht möglich ist.

## Patentansprüche

1. Verfahren zum Projektieren und/oder Betreiben einer Automatisierungseinrichtung, welche eine Master-Einheit (7; 15) und mehrere mit der Master-Einheit (7; 15) über einen Bus verbindbare Slave-Einheiten (11, 12, 13; 16, 17, 18) umfasst, welche jeweils zur Aufnahme von mindestens einer Slave-Baugruppe vorgesehen sind, wobei während einer Projektierungsphase
- die Anzahl der Slave-Einheiten (11, 12, 13; 16, 17, 18) und für jede Slave-Einheit (11, 12, 13; 16, 17, 18) ein Nutzdatenbereich projektierbar ist, auf welchen die Master-Einheit (7; 15) während eines Steuerbetriebs lesend und/oder schreibend zugreift,
- für jede Slave-Baugruppe einer Slave-Einheit (11, 12, 13; 16, 17, 18) ein Teil des Nutzdatenbereiches dieser Slave-Einheit (11, 12, 13; 16, 17, 18) zuordenbar ist,
- für mindestens eine Slave-Einheit (11, 12, 13; 16, 17, 18) der Nutzdatenbereich dieser Slave-Einheit (11, 12, 13; 16, 17, 18) für eine eventuelle Erweiterung der Slave-Einheit (11, 12, 13) mit mindestens einer Slave-Baugruppe vorbereitet wird, indem zusätzlich zu dem für den aktuellen Steuerbetrieb erforderlichen projektierten Nutzdatenbereich dieser Slave-Einheit (11, 12, 13; 16, 17, 18) ein Reserve-Nutzdatenbereich (11c, 11d, 13b, 13c, 13d; 16d, 18d) für die mindestens eine Slave-Baugruppe projektiert wird.

2. Verfahren nach Anspruch 1, **dadurch gekennzeichnet, dass** der Nutzdaten- und Reserve-Nutzdatenbereich der mindestens einen Slave-Einheit menügesteuert projektierbar ist.

3. Engineeringsystem zum Projektieren einer Automatisierungseinrichtung, welche eine Master-Einheit und mehrere mit der Master-Einheit über einen Bus verbindbare Slave-Einheiten umfasst, welche jeweils zur Aufnahme von mindestens einer Slave-Baugruppe vorgesehen sind, wobei während einer Projektierungsphase durch das Engineeringsystem
- die Anzahl der Slave-Einheiten und für jede Slave-Einheit ein Nutzdatenbereich projektierbar ist, auf welchen die Master-Einheit während eines Steuerbetriebs lesend und/oder schreibend zugreift,
- für jede Slave-Baugruppe einer Slave-Einheit (11, 12, 13; 16, 17, 18) ein Teil des Nutzdatenbereiches dieser Slave-Einheit (11, 12, 13; 16, 17, 18) zuordenbar ist,
- für mindestens eine Slave-Einheit (11, 12, 13; 16, 17, 18) der Nutzdatenbereich dieser Slave-Einheit (11, 12, 13; 16, 17, 18) für eine eventuelle Erweiterung der Slave-Einheit (11, 12, 13; 16, 17, 18) mit mindestens einer Slave-Baugruppe vorbereitet wird, indem zusätzlich zu dem für den aktuellen Steuerbetrieb erforderlichen projektierten Nutzdatenbereich dieser Slave-Einheit (11, 13; 16, 18) ein Reserve-Nutzdatenbereich (11c, 11d, 13b, 13c, 13d; 16d, 18d) für die mindestens eine Slave-Baugruppe projektiert wird.

4. Engineeringsystem nach Anspruch 3, **dadurch gekennzeichnet, dass** der Nutzdaten- und Reserve-Nutzdatenbereich durch das Engineeringsystem menügesteuert projektierbar ist.

5. Automatisierungseinrichtung, welche eine Master-Einheit (7; 15) und mehrere mit der Master-Einheit (7; 15) über einen Bus verbindbare Slave-Einheiten (11, 12, 13; 16, 17, 18) umfasst, welche jeweils zur Aufnahme von mindestens einer Slave-Baugruppe vorgesehen sind, wobei
- während einer Projektierungsphase die Anzahl der Slave-Einheiten (11, 12, 13; 16, 17, 18) und für jede Slave-Einheit (11, 12, 13; 16, 17, 18) ein Nutzdatenbereich projektierbar ist, auf welchen die Master-Einheit während eines Steuerbetriebs lesend und/oder schreibend zugreift, und für jede Slave-Baugruppe einer Slave-Einheit (11, 12, 13; 16, 17, 18) ein Teil des Nutzdatenbereiches dieser Slave-Einheit (11, 12, 13; 16, 17, 18) zuordenbar ist,
- für mindestens eine Slave-Einheit (11, 12, 13; 16, 17, 18) der Nutzdatenbereich dieser Slave-Einheit (11, 12, 13; 16, 17, 18) für eine eventuelle Erweiterung der Slave-Einheit (11, 12, 13; 16, 17, 18) mit mindestens einer Slave-Baugruppe vorbereitet ist, indem zusätzlich zu dem für den aktuellen Steuerbetrieb erforderlichen projektierten Nutzdatenbereich dieser Slave-Einheit (11, 13; 16, 18) ein Reserve-Nutzdatenbereich (11c, 11d, 13b, 13c, 13d; 16d, 18d) für die mindestens eine Slave-Baugruppe projektiert ist.

6. Automatisierungseinrichtung nach Anspruch 5, **dadurch gekennzeichnet, dass** die Master-Einheit eine Erweiterung der Automatisierungseinrichtung um die mindestens eine Slave-Baugruppe einer Kopfbaugruppe der Slave-Einheit anzeigt.

## Claims

1. Method for configuration and/or operation of an automation device which has a master unit (7; 15) and a plurality of slave units (11, 12, 13; 16, 17, 18) which can be connected to the master unit (7; 15) via a bus and are each intended to accommodate at least one slave module, in which case, during a configuration phase:
- the number of slave units (11, 12, 13; 16, 17, 18) and a payload data area for each slave unit (11, 12, 13; 16, 17, 18) can be configured, to which the master unit (7; 15) makes read and/or write accesses during control operation,
- for each slave module of a slave unit (11, 12, 13; 16, 17, 18) a part of the payload data area can be allocated to this slave unit (11, 12, 13; 16, 17, 18)
- for at least one slave unit (11, 12, 13; 16, 17, 18) the payload data area of this slave unit (11, 12, 13; 16, 17, 18) is prepared for possible addition of at least one slave module to the slave unit (11, 12, 13) in that, in addition to the configured payload data area which is required for current control operation of this slave unit (11, 12, 13; 16, 17, 18), a reserve payload data area (11c, 11d, 13b, 13c, 13d; 16d, 18d) is configured for the at least one slave module.

2. Method according to Claim 1, **characterized in that** the payload data area and reserve payload data area of the at least one slave unit can be configured with menu control.

3. Engineering system for configuration of an automation device, which has a master unit and a plurality of slave units which can be connected to the master unit via a bus and are each intended to accommodate at least one slave module, in which case, during a configuration phase, the engineering system
- can configure the number of slave units and a payload data area for each slave unit, to which the master unit makes read and/or write accesses during control operation,
- can, for each slave module of a slave unit (11, 12, 13; 16, 17, 18) allocate a part of the payload data area to this slave unit (11, 12, 13; 16, 17, 18),
- prepares, for at least one slave unit (11, 12, 13; 16, 17, 18), the payload data area of this slave unit (11, 12, 13; 16, 17, 18) for possible addition of at least one slave module to the slave unit (11, 12, 13; 16, 17, 18) in that, in addition to the configured payload data area which is required for current control operation of this slave unit (11, 12, 13; 16, 17, 18), a reserve payload data area (11c, 11d, 13b, 13c, 13d; 16d, 18d) is configured for the at least one slave module.

4. Engineering system according to Claim 3, **characterized in that** the payload data area and the reserve payload data area can be configured by the engineering system with menu control.

5. Automation device, which has a master unit (7; 15) and a plurality of slave units (11, 12, 13; 16, 17, 18) which can be connected to the master unit (7; 15) via a bus and are each intended to accommodate at least one slave module, wherein
- during a configuration phase, the number of slave units (11, 12, 13; 16, 17, 18) and a payload data area for each slave unit (11, 12, 13; 16, 17, 18) can be configured, to which the master unit makes read and/or write accesses during control operation, and for each slave module of a slave unit (11, 12, 13; 16, 17, 18) a part of the payload data area can be allocated to this slave unit (11, 12, 13; 16, 17, 18),
- for at least one slave unit (11, 12, 13; 16, 17, 18) the payload data area of this slave unit (11, 12, 13; 16, 17, 18) is prepared for possible addition of at least one slave module to the slave unit (11, 12, 13; 16, 17, 18) in that, in addition to the configured payload data area which is required for current control operation of this slave unit (11, 13; 16, 18), a reserve payload data area (11c, 11d, 13b, 13c, 13d; 16d, 18d) is configured for the at least one slave module.

6. Automation device according to Claim 5, **characterized in that** the master unit indicates to a header module of the slave unit that at least one slave module has been added to the automation device.

## Revendications

1. Procédé de configuration et/ou d'exploitation d'un dispositif d'automatisation qui comprend une unité maîtresse (7; 15) et plusieurs unités esclaves (11, 12, 13 ; 16, 17, 18) qui peuvent être reliées à l'unité maîtresse (7; 15) par l'intermédiaire d'un bus et qui sont prévues chacune pour loger au moins un module esclave, dans lequel, pendant la phase de configuration,
- le nombre des unités esclaves (11, 12, 13 ; 16, 17, 18) est configurable et, pour chaque unité esclave (11, 12, 13 ; 16, 17, 18), une zone de données utiles est configurable, zone à laquelle l'unité maîtresse (7 ; 15) accède en lecture et/ou en écriture pendant une exploitation de commande,
- pour chaque module esclave d'une unité esclave (11, 12, 13; 16, 17, 18), une partie de la zone de données utiles de cette unité esclave (11, 12, 13; 16, 17, 18) peut lui être associée,
- pour au moins une unité esclave (11, 12, 13 ; 16, 17, 18), la zone de données utiles de cette unité esclave (11, 12, 13 ; 16, 17, 18) est préparée pour une éventuelle extension de l'unité esclave (11, 12, 13) avec au moins un module esclave par le fait que, en plus de la zone de données utiles, configurée et nécessaire à l'exploitation de commande actuelle, de cette unité esclave (11, 12, 13 ; 16, 17, 18), une zone de données utiles de réserve (11c, 11d, 13b, 13c, 13d ; 16d, 18d) est configurée pour le ou les modules esclaves.

2. Procédé selon la revendication 1, **caractérisé par le fait que** la zone de données utiles et la zone de données utiles de réserve de la ou des unités esclaves sont configurables par une commande par menu.

3. Système d'ingénierie pour la configuration d'un dispositif d'automatisation qui comprend une unité maîtresse et plusieurs unités esclaves qui peuvent être reliées à l'unité maîtresse par l'intermédiaire d'un bus et qui sont prévues chacune pour loger au moins un module esclave, dans lequel, pendant une phase de configuration par le système d'ingénierie,
- le nombre des unités esclaves et, pour chaque unité esclave, une zone de données utiles à laquelle l'unité maîtresse accède en lecture et/ou en écriture pendant une exploitation de commande sont configurables,
- pour chaque module esclave d'une unité esclave (11, 12, 13 ; 16, 17, 18), une partie de la zone de données utiles de cette unité esclave (11, 12, 13 ; 16, 17, 18) peut lui être associée,
- pour au moins une unité esclave (11, 12, 13 ; 16, 17, 18), la zone de données utiles de cette unité esclave (11, 12, 13 ; 16, 17, 18) est préparée pour une éventuelle extension de l'unité esclave (11, 12, 13 ; 16, 17, 18) avec au moins un module esclave par le fait que, en plus de la zone de données utiles, configurée et nécessaire à l'exploitation de commande actuelle, de cette unité esclave (11, 13 ; 16, 18), une zone de données utiles de réserve (11c, 11d, 13b, 13c, 13d ; 16d, 18d) est configurée pour le ou les modules esclaves.

4. Système d'ingénierie selon la revendication 3, **caractérisé par le fait que** la zone de données utiles et la zone de données utiles de réserve sont configurables par une commande par menu au moyen du système d'ingénierie.

5. Dispositif d'automatisation qui comprend une unité maîtresse (7; 15) et plusieurs unités esclaves (11, 12, 13 ; 16, 17, 18) qui peuvent être reliées à l'unité maîtresse (7 ; 15) par l'intermédiaire d'un bus et qui sont prévues chacune pour loger au moins un module esclave, dans lequel,
- pendant une phase de configuration, le nombre des unités esclaves (11, 12, 13 ; 16, 17, 18) est configurable et, pour chaque unité esclave (11, 12, 13 ; 16, 17, 18), une zone de données utiles est configurable, zone à laquelle l'unité maîtresse accède en lecture et/ou en écriture pendant une exploitation de commande, et pour chaque module esclave d'une unité esclave (11, 12, 13 ; 16, 17, 18), une partie de la zone de données utiles de cette unité esclave (11, 12, 13 ; 16, 17, 18) peut lui être associée,
- pour au moins une unité esclave (11, 12, 13 ; 16, 17, 18), la zone de données utiles de cette unité esclave (11, 12, 13 ; 16, 17, 18) est préparée pour une éventuelle extension de l'unité esclave (11, 12, 13 ; 16, 17, 18) avec au moins un module esclave par le fait que, en plus de la zone de données utiles, configurée et nécessaire à l'exploitation de commande actuelle, de cette unité esclave (11, 13 ; 16, 18), une zone de données utiles de réserve (11c, 11d, 13b, 13c, 13d ; 16d, 18d) est configurée pour le ou les modules esclaves.

6. Dispositif d'automatisation selon la revendication 5, **caractérisé par le fait que** l'unité maîtresse signale une extension du dispositif d'automatisation avec le ou les modules esclaves à un module de tête de l'unité esclave.
